# EUROPEAN PATENT APPLICATION

(11) **EP 2 416 201 A2**
(43) Date of publication of application: **08.02.2012**
(21) Application number: 11006419.3
(22) Date of filing: 04.08.2011
(51) Int. Cl.: G02B 27/01, F41G 3/06, F41G 3/26, F41G 3/22

(54) **Multipurpose aiming sight with head-up display module**

(30) Priority: 05.08.2010 US 850929
(71) Applicant: L-3 COMMUNICATIONS EOTECH, INC., Ann Arbor MI 48108 (US)
(72) Inventor: Tai, Anthony M., Plymouth Michigan 48170 (US)
(74) Representative: GPI & Associés

(57) **Abstract**

A multipurpose sighting device includes a viewing window, an illuminated display, a beam combiner positioned to transmit light from a target scene and reflect light from the illuminated display through the viewing window, and projection optics having a plurality of optical elements to direct light from the display toward the beam combiner, the projection optics projecting an image of the display through the viewing window at a distance to be in focus with the target scene.

## Description

Embodiments of the present disclosure relate to a multipurpose aiming sight with a head-up display module.

Conventional aiming sights superimpose the image of an aiming reticle over a magnified or unmagnified scene. In a 1X (unmagnified) reflex sight, the aiming reticle may be superimposed on the direct view scene. With a magnified riflescope, a reticle may be placed over the magnified image formed by the objective lens and viewed through an eyepiece.

For a reflex sight, the projection of the aiming reticle is generally achieved with a reflective collimator. See U.S. Pat. Nos. 4,346,995 and 5,189,555, for example. Such a collimator can provide very good collimation for a small aiming reticle such as a small dot provided by a light emitting diode (LED). However, it generally cannot be used to project a large reticle pattern oran image scene because of off-axis aberration.

Prior art sights may use a long eye relief eyepiece and a beam combiner to provide a thermal image displayed over a direct view image. See U.S. Pat. No. 7,319,557, for example. While suitable for some applications, this arrangement limits the field of view of the system for a given exit aperture.

A wide field of view head-up display may be provided by using a curved beam combiner with optical power. See U.S. Pat. Nos. 5,268,696 and 6,392,812, for example. However, a curved beam combiner generally results in distortion of the direct view image, particularly in a fast compact optical system. Moreover, any asymmetry in the X and Y directions requires complicated asymmetric projection optics to minimize the aberration and distortion in the projected image.

For some military and law enforcement applications, weapons are provided with either a 1X reflex sight for close quarter combat and/or a magnified riflescope for long range target engagement. In one approach, a mini reflex sight is mounted on top of a rifle scope so that both are available as needed. However, this requires one to move his head to a different position to use either scope and to change his cheek weld, i.e. the position of the weapon stock against the cheek. Another approach includes 1X reflex sight with a magnified rifle scope mounted behind that can be flipped in and out of aiming position as needed. However, the mechanism that flips the rifle scope in and out of position is vulnerable to damage. In addition, the balance of the weapon is affected by the change in position of the rifle scope as it is not symmetrically positioned about the center of gravity. Another approach uses a variable power 1X-4X rifle scope. The scope is set at 1X for close quarter combat/battle (CQB) with magnification provided as needed for longer range engagements. However, a variable power rifle scope at 1X does not have the virtually unlimited eye relief or distortion free direct view of a reflex sight. Moreover, the view seen by one eye through the scope and the direct view seen by the other eye are not registered, making it difficult to shoot with both eyes opened.

A multipurpose sighting device includes a viewing window, an illuminated display, a beam combiner positioned to transmit light from a target scene and reflect light from the illuminated display through the viewing window, and projection optics that project an image of the display through the viewing window at a distance to be in focus with the target scene.

A method for sighting a target in a target scene includes imaging light from the target scene onto a detector array, generating an image including an aiming reticle on an illuminated display, projecting the image from the illuminated display through a viewing window, and combining the image from the illuminated display with a direct view of the target scene when a direct view window is open and generating an image of the target scene from the detector array with the aiming reticle superimposed on the illuminated display when the direct view window is blocked.

Various embodiments may include a sighting device comprising a housing having a target scene direct view aperture, a target scene detector aperture, and a viewing aperture with a detector array disposed within the housing, an objective lens disposed within the housing near the detector aperture and positioned to image a target scene on the detector array, and an illuminated display disposed within the housing and having an array of individually controllable pixels. The device may also include a controller disposed within the housing and in communication with the detector array and the illuminated display, projection optics disposed within the housing and including at least three lenses with a folding mirror disposed between two of the three lenses, the projection optics projecting an image of the illuminated display, a beam combiner positioned within the housing to reflect light from the folding mirror through the viewing aperture and to transmit light from the direct view aperture to the viewing aperture, and a shutter positioned to selectively block light from the direct view aperture, wherein the controller controls the illuminated display to display an aiming reticle when the shutter is open and to display an image from the detector array with an aiming reticle superimposed when the shutter is closed.

In one embodiment of the sighting device, the illuminated display is illuminated with a narrowband light source having an associated wavelength and the beam combiner has a spectrally selective reflection profile that matches the narrowband light source.

Embodiments may include a sighting device wherein the shutter comprises an electrically controllable shutter in communication with the controller, or a hinged cover.

In one embodiment of a sighting device, the controller shifts position of the aiming reticle on the illuminated display. The controller may automatically adjust position of the aiming reticle on the illuminated display in response to distance of a selected target in the target scene.

In various embodiments of the sighting device, the beam combiner comprises a partially silvered mirror having a greater transmissivity than reflectivity.

In one embodiment, the sighting device further comprises a second folding mirror movable between a first position parallel to the beam combiner to reflect light transmitted through the beam combiner from the illuminated display back through the beam combiner and viewing aperture while blocking light from the target scene direct view aperture, and a second position allowing light from the target scene direct view aperture to pass through the beam combiner and viewing aperture. The sighting device may include a controller that moves the second folding mirror to the first position when the shutter is closed. The sighting device may also include an external input In communication with the controller, wherein the controller controls the illuminated display to display information from an external source connected to the external input. The external source may comprise a target range finder with the display information including a distance to a selected target in the target scene.

In other embodiments, the sighting device includes a shutter that is manually operated. These embodiments may include a switch in communication with the controller operative to detect when the shutter is closed.

The present disclosure includes embodiments having various advantages. For example, various embodiments provide a multipurpose sight combining a wide field-of-view 1X (direct view) reflex sight with a magnified electronic rifle scope. The sighting device does not require a change in head position to switch between the 1X reflex sight and the electronically generated view. There is no change in center of gravity or balance when using either mode of operation. The use of flat optics for the direct view operation provides an undistorted image of the target scene facilitating target acquisition and environment awareness with both eyes opened.

The above advantages and other advantages and features will be readily apparent from the following detailed description of the preferred embodiments when taken in connection with the accompanying drawings.

Embodiments of the present disclosure described herein are recited with particularity in the appended claims. However, other features will become more apparent, and the embodiments may be best understood by referring to the following detailed description in conjunction with the accompanying drawings, in which:
Figure 1 shows a ray tracing diagram illustrating operation of a sighting device/method according to embodiments of the present disclosure;
Figure 2 illustrates a representative narrowband or monochromatic embodiment of a multipurpose sighting device according to the present disclosure;
Figure 3 illustrates a representative full-color embodiment of a multipurpose sighting device according to the present disclosure;
Figure 4 is a block diagram illustrating operation of a device/method for sighting according to various embodiments of the present disclosure; and
Figure 5 is illustrates operation of a device/method for sighting according to various embodiments of the present disclosure.

As those of ordinary skill in the art will understand, various features of the embodiments illustrated and described with reference to any one of the Figures may be combined with features illustrated in one or more other Figures to produce embodiments that are may not be explicitly illustrated or described. The combinations of features illustrated provide representative embodiments for typical applications. However, various combinations and modifications of the features consistent with the teachings of the present disclosure may be desired for particular applications or implementations. The representative embodiments used in the illustrations relate generally to a sighting device that may be used in a direct view mode or an electronically imaged mode that may provide an enhanced and/or magnified image and aiming reticle. Those of ordinary skill in the art may recognize similar applications or implementations not specifically described.

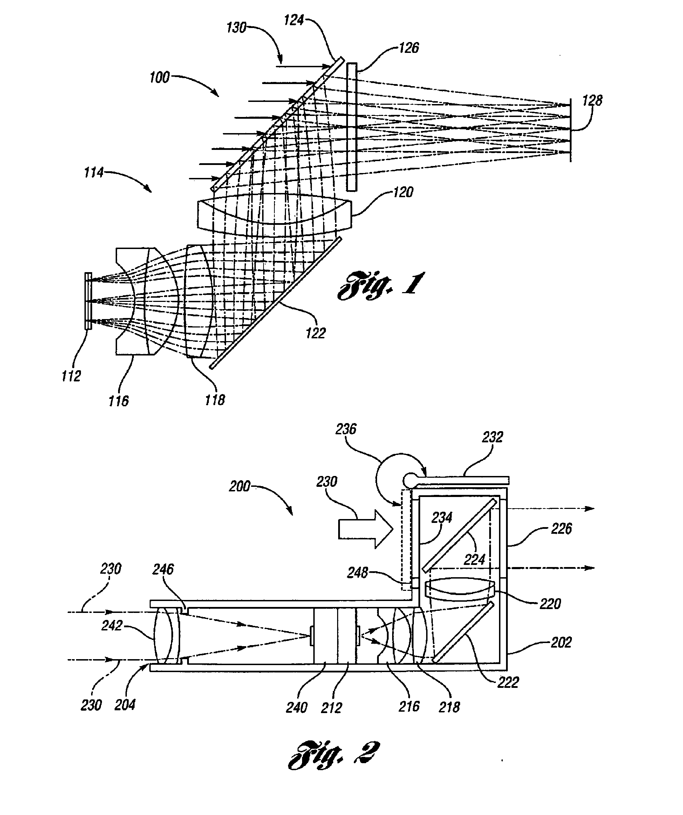

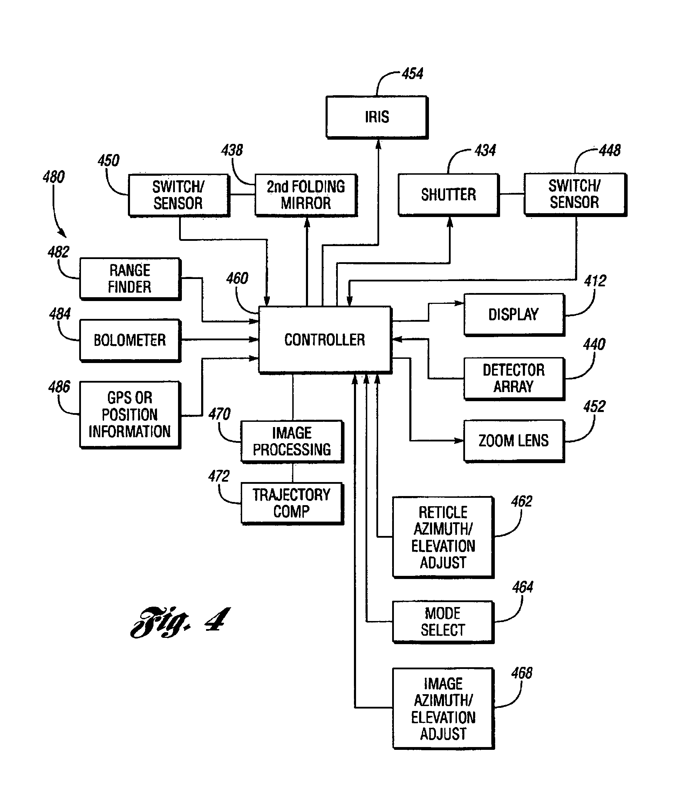

Figure 1 is a ray tracing diagram illustrating design and operation of a head-up display module that may be used in a sighting device or method according to embodiments of the present disclosure. Device 100 includes an illuminated display 112 having a plurality of individually controlled pixels arranged in an array. Display 112 is in communication with an associated processor or controller 460 (Figure 4) and may be used to display images and digital data. In one embodiment, display 112 is implemented by a transmissive liquid crystal display illuminated by a narrowband source. For example, a micro LCD display (e.g. model LV640M manufactured by Kopin Corporation of Westboro, Massachusetts), which is illuminated by one or more LEDs emitting substantially monochromatic light or a narrow band of light (e.g. 20nm band of light) with a center or peak wavelength of about 620 nm may be used. Of course other types of monochrome or color displays may be used depending on the particular application and implementation. Similarly, the center or peak wavelength and bandwidth or range of wavelengths may be selected to suit particular applications to provide a particular color of graphic information and/or aiming reticle while allowing other wavelengths to be substantially transmitted such that the direct view is not significantly different from the view seen by the other eye to facilitate sighting with both eyes opened.

The image displayed on illuminated display 112 can be a digitally generated graphic, such as an aiming reticle, target range information, GPS information, etc. based on internal information or external information provided via a wired or wireless data port. Display 112 may also generate an image from an internal or external imaging sensor such as a CCD detector array (e.g. SONY XCL-X700) or a micro bolometer focal plane array (e.g. L-3 Infrared Products Series 17 FPA) as illustrated and described in greater detail with reference to Figures 2-5.

As also illustrated in Figure 1, projection optics 114 include a plurality of optical elements 116, 118, and 120 with a folding mirror 122 disposed between two of the optical elements 118, 120 in this embodiment. Projection optics 114 project an image of display through a viewing window 126 at a distance to be in focus with the target scene. In the embodiments represented by Figure 1, projection optics 114 is implemented by three (3) lenses 116, 118, and 120 with folding mirror 122 disposed between lenses 118 and 120 to provide a more compact arrangement. Projection optics 114 and folding mirror 122 project the image of illuminated display 112 using a beam combiner 124 through viewing window 126 a far distance so the image is at the same focus as the distant target scene. In this embodiment, folding mirror 122 is positioned at 45 degrees between lens 118 and lens 120 to change the optical path from horizontal to vertical and direct light from illuminated display 112 upward, which is then reflected by beam combiner 124 back to a horizontal path to exit viewing window 126.

As described in greater detail herein, beam combiner 124 may be implemented by a spectrally selective beam combiner in some embodiments or alternatively a generally broad band beam combiner in other embodiments depending on the particular application and implementation. A spectrally selective beam combiner may be implemented by a rugate-type beam combiner or a holographic beam combiner, for example. As known, a rugate type beam combiner uses multiple coating layers of differing refractive indices while a holographic beam combiner uses an interference pattern recorded in a thin layer of material such as dichromated gelatin, silver halide emulsion, or photopolymer in the form of refractive index variations. Anbroad band beam combiner may be provided by a partially silvered mirror, for example. When implemented by a spectrally selective beam combiner, beam combiner 124 has a peak reflectivity at a wavelength that may be selected to substantially match the peak or center emission wavelength of the illumination source of display 112, such as 620 nm for example. The bandwidth or range of wavelengths reflected by the beam combiner may also be of a similar range as the illumination source for optimum light utilization.

Spectrally selective embodiments of beam combiner 124 transmit light at wavelengths outside of the selected reflective wavelength range or band. In one embodiment having an appropriately matched beam combiner 124 and display 112, up to 90% of light from display 112 is reflected by beam combiner 124 and directed toward viewing window 126 while up to 90% of light 130 from the target scene, which generally includes a full spectrum of wavelengths outside of the reflected wavelength(s), is transmitted. through beam combiner 124 to be combined with the reflected light seen by the user. System 100 provides a wide field of view and long eye relief for situational awareness with an exit pupil 128 at a predetermined distance from viewing window 126.

A head-up display module as illustrated in Figure 1 may be used in a number of applications, such as a multipurpose sighting/aiming device illustrated in the embodiment shown in Figure 2. Components illustrated in the embodiments of Figures 2-5 having similar structure and/or function to those illustrated in Figure 1 are designated with similar reference numerals.

Sighting device 200 includes a housing 202 having a target scene direct view aperture/window 234 and a target scene detector aperture 204 for receiving light 230 from a target scene. As will be appreciated by those of ordinary skill in the art, as used herein "light" is not limited to visible light and may include a wide range of the electromagnetic spectrum depending on the particular application. In the representative embodiment illustrated in Figure 2, an objective lens 242 is disposed within housing 202 in front of detector aperture 204 and is used in combination with a fixed or variable iris 246 to focus energy radiated from the target scene onto a sensor or detector array 240. In one embodiment, objective lens 242 is positioned to image a target scene on the detector array. Depending on the particular application and implementation, objective lens 242 may provide fixed or variable magnification (optical power), which may be further digitally enhanced or magnified. Likewise, although illustrated as a single lens, a multiple-element optic may be used to provide magnification or other image enhancement.

Detector array 240 disposed within housing 202 is connected to a controller 460 (Figure 4) that may be implemented by a dedicated microcontroller or by a programmable microprocessor-based controller, for example. Images or other information collected by detector array 240 may be processed by the controller and used to control the image displayed and the position of the image on illuminated display 212 as described in greater detail herein. In the representative embodiment illustrated in Figure 2, display 212 is a transmissive substantially monochromatic LCD display having an array of individually controllable pixels and is backlit by a narrowband LED source emitting light centered about 620 nm with a range of about 20 nm, i.e. light of wavelengths between about 610-630 nm, which generally appears amber or orange to the user. Of course, various other types of displays may be used for particular applications.

Projection optics implemented by lenses 216, 218, and 220 are disposed within housing 202 and include a folding mirror 222 disposed between two of the three lenses, which are lenses 218 and 220 in this embodiment. The projection optics project an image of illuminated display 212 to spectrally selective beam combiner 224. Beam combiner 224 has a peak reflectivity wavelength to match the center wavelength of display 212 so that most light having a wavelength around the peak reflectivity wavelength exiting lens 220is reflected by beam combiner 240, and most light 230 from the target scene passing through direct view aperture 234 is transmitted through beam combiner 224, except for the narrow band of light near the peak wavelength, which is about 620 nm in one embodiment. The combined light from the target scene and the image of illuminated display 212 then passes through viewing window 226 for viewing by a user. As those of ordinary skill in the art will recognize, practical optical devices are generally not 100% efficient. As such, references to light being transmitted or reflected by a device do not imply that all incident light is transmitted or reflected.

Various embodiments of a sighting device according to the present disclosure have a housing 202 that is hermetically sealed with an internal atmosphere of nitrogen to eliminate contaminants as well as condensation or fogging. As such, housing 202 is sealed by objective lens 242 and generally transparent viewing window 226 and target scene window 234. Various windows and lenses may also be coated to provide desired characteristics. For example, anti-reflective (AR) coatings or glare reducing coatings may be applied to one or more surfaces of various components. As used herein, a "window" may refer to an opening or aperture that allows light to enter or exit the device, or may imply a generally transparent physical barrier.

As also shown in Figure 2, sighting device 200 may include a shutter 232 positioned to selectively block light from direct view aperture/window 234. As such, shutter 232 blocks light from the target scene from being transmitted through beam combiner 224 and viewing window 226. In this embodiment, shutter 232 is implemented by a manually operable opaque cover that can be moved as indicated at 236 between a first position (shown in solid) with the direct view window 234 open, and a second position (shown in dashed line) where the direct view window 234 is blocked. A sensor or switch 248 may be provided to detect when shutter 232 is closed. Switch/sensor 248 may detect actual position of shutter 232, or may be activated when shutter 232 is in a closed position or open position, for example. Of course, switch/sensor 248 may be disposed in a different position than illustrated to detect the actual position or open position of shutter 232. Shutter 232 may be implemented by a hinged cover as illustrated, or by another type of electrically actuated manually controlled shutter or automatically controlled mechanical shutter, such as a louvered shutter, multi-blade iris, etc. Alternatively, an electronically controlled optical shutter may be provided, such as an LCD shutter, for example, in communication with a controller 460 (Figure 4) as described in greater detail herein. When implemented by an electronic shutter, the shutter may be a separate component positioned behind direct view window 234, or may be function as direct view window 234 depending on the particular implementation.

When used in a direct viewing mode as a 1 X reflex or close combat sight, a user looking through viewing window 226 with shutter 232 open will have a direct view through beam combiner 224 and window 234 of the target scene as well as an image of illuminated display 212 reflected by beam combiner 224. With shutter 232 in the open position, illuminated display 212 displays an orange on black aiming reticle. The operator then sees the orange color aiming reticle which is projected out to a distance over the target scene to be in focus with the target scene. To change the elevation and/or azimuth position of the reticle to zero the sight, the reticle image can be shifted laterally in the X-Y positions on display 212 such that a point of aim coincides with the point of impact of the projectile fired by an associated weapon. Because the reticle is digitally generated, the type of reticle or reticle pattern can be easily changed if desired and is user selectable in various embodiments according to the present disclosure. In one embodiment, reticle position is automatically adjusted on display 212 in response to target distance or range of a selected target in the target scene to compensate for ballistic trajectory.

In addition to the image of a reticle, display 212 may also display digital data, which may be obtained from embedded and/or external sensors, such as a laser range finder, an electronic compass, a bolometer, and/or a global positioning system, for example. Display 212 may also display an image or information processed from an image of the target scene captured by detector array 240.

In a magnified rifle scope mode of operation, shutter 232 is closed as indicated at 236 to cover the front of direct view window 234 and block light 230 from entering direct view window 234. For embodiments having a manually actuated shutter/cover 232 and switch/sensor 248, the switch/sensor is activated when shutter 232 is closed to signal the corresponding controller 460 (Figure 4) and/or associated electronics to change from displaying a reticle to displaying an image from detector array 240 with a digital reticle superimposed on, or composited with the image. As previously described, the position of the digital reticle can be shifted to match the point of impact of the bullet fired by an associated weapon. In one embodiment, the position of the digital reticle may be dynamically adjusted in response to sensor data, such as a range finder, for example. The image captured by detector array 240 may be processed to enhance the image and/or digitally magnify the image before being displayed by display 212. Similarly, imaging lens 242 that forms the image on detector array 240 may be implemented by a fixed objective lens, or by a zoom lens to provide optical zoom/magnification in addition to, or in place of, various digital image processing.

As previously described, illuminated display 212 may be implemented by a monochromic display, with detector array 240 implemented by a black and white imaging detector used with a spectrally selective beam combiner 224. In an alternative embodiment, a full color image may be provided using a color imaging sensor/detector 240, such as a Hitachi HV-FF2F color CCD imaging sensor, in combination with a polychromatic or color illuminated display 212, such as a KopinXGALVC micro LCD display. In this embodiment, the narrow spectral band beam combiner 224 can be replaced by a broadband beam combiner, which may be implemented by a partially silvered mirror, for example. However, the reticle brightness and optical transmission will be reduced. For example, using a 30% reflective/70% transmissive (30R/70T) partially silvered beam combiner 224 would result in only 30% of the light from display 212 being reflected by beam combiner 224 through viewing window 226 and only 70% of light 230 entering direct view window 234 from the target scene being transmitted through beam combiner 224 and viewing window 226 to the user.

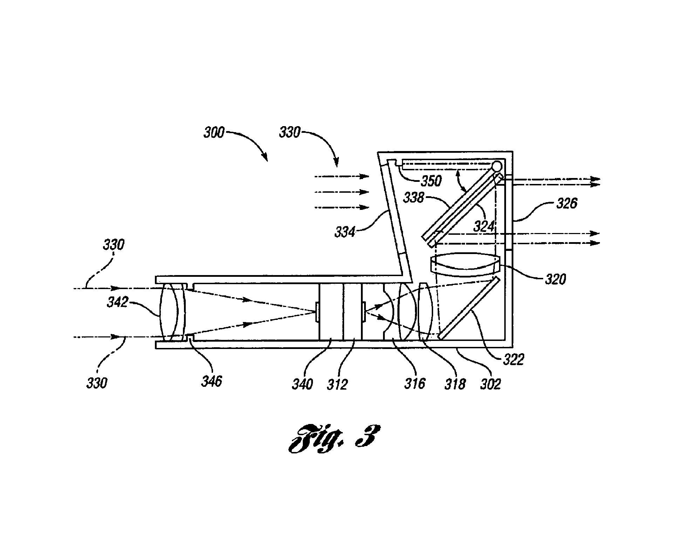

Another embodiment of a sighting device incorporating a head-up display module according to the present disclosure is illustrated in Figure 3. Sighting device 300 includes a color illuminated display 312 and a color imaging sensor 340 with a spectrally selective beam combiner 324. Similar to the embodiment of Figure 2, a fixed or variable objective lens 342 and fixed or variable iris 346 are used to image light 330 from a target scene onto color detector array 340, which is in communication with associated electronics (Figure 4) to provide corresponding digital data to color illuminated display 312. Projection optics formed by lenses 316, 318, and 322 in combination with a first achromatic folding mirror 322 project an image of display 312, which is partially reflected by beam combiner 324. In this embodiment, color display 312 is programmed to display an aiming reticle and any other information in the color that matches the spectral reflectivity of beam combiner 324 when operating in the direct view or 1X reflex mode. Beam combiner 324 reflects a majority of this light and in some embodiments up to 90% of light at the selected wavelengths while transmitting light of wavelengths outside of the narrow band as previously described.

Target scene light 330 enters through target window 334 and a majority of the light outside of the narrowband wavelengths of beam combiner 324 passes through beam combiner 324 and viewing window 326 to provide a direct view mode with an aiming reticle and/or other information projected to a distance to be in focus with the direct view scene as previously described. In some embodiments, up to 90% of the light 330 will pass through beam combiner 324 and viewing window 326. A second folding mirror 338 disposed on the target scene side of beam combiner 324 is positionable between a first position parallel to beam combiner 324 to block light 330 from the target scene and reflect light from folding mirror 322 passing through beam combiner 324 to viewing window 326, and a second position (dashed line) allowing light from the target scene to pass through beam combiner 234 and viewing window 326.

When in the 1X close combat sight mode, second folding mirror 338 stays in the up position (dashed line) activating switch/sensor 350. Sighting device 300 operates as previously described with 90% of the narrow band light from display 312 forming an image of the reticle and/or any other superimposed information directed through viewing window 326 toward the user. This light is combined with the approximately 90% of light 330 (wavelengths outside the spectral band of the beam combiner) from the target scene that passes through beam combiner 324 and viewing window 326.

Mirror 338 is moved to the first position parallel to beam combiner 324 when device 300 is switched into the digital imaging mode, which may be used to provide a magnified electronic riflescope, for example. When moved down into the first position, mirror 338 automatically blocks the outside view performing the function of shutter 232 as described with respect to the embodiment of Figure 2. Depending on the particular implementation, mirror 338 may be manually actuated with an associated switch (not shown) used to detect mirror position. Alternatively, mirror 338 may be electronically controlled by an associated controller (460, Figure 4). In either case, moving mirror 338 into the first or down position automatically switches the mode of display 312 to display the image from detector array 340 in addition to any other superimposed data or graphics, such as the aiming reticle, target distance, etc. All wavelengths of light that are not reflected by narrow band beam combiner 324 pass through the beam combiner and are reflected by second folding mirror 338 at the same angle as those wavelengths reflected by beam combiner 324. Provided that beam combiner 324 and second folding mirror 338 are parallel to each other, the images reflected by the beam combiner and the mirror are registered and nearly all the light from display 312 is directed through viewing window 326 to the user, presenting a full color image of the target scene with any additional information, such as an aiming reticle, target range, thermal image, GPS information, temperature, etc. digitally superimposed. As such, the arrangement illustrated in the representative embodiment of Figure 3 maintains high see through transmission in the 1X close combat sight mode and high image brightness in both the direct view 1X close combat sight mode and the digital image mode.

Figure 4 is a block diagram illustrating a system or method for sighting a target in a target scene using a head-up display module according to embodiments of the present disclosure. Those of ordinary skill in the art will recognize that various functions and devices represented in Figure 4 are optional and depend on the particular application and implementation. Various embodiments may incorporate different combinations of devices/functions illustrated and any of the functions or components illustrated are not necessarily required for an operable embodiment. Controller 460 controls illuminated display 412 to selectively display a selected aiming reticle and/or other digital information based on the current operating mode and/or user selected information. For example, depending on the particular application and implementation, controller 460 may be implemented by a dedicated microcontroller or ASIC in combination with associated electronics to drive display 412. In some embodiments, controller 460 is implemented by a programmable microprocessor based controller. As such, in some embodiments, the reticle may be selected by a user with associated input keys or switches, such as mode select switch 464, for example. Other embodiments may display only a single reticle selected during manufacturing or factory programming of the associated controller, or assembly using a particular ASIC or microcontroller, for example.

Controller 460 receives signals or data from detector array 440, which may be a black/white or color imaging detector, for example. The image may be processed by controller 460 using selected image processing algorithms 470 that may be used to provide image enhancement, target identification, digital magnification, etc. Controller 460 generates appropriate signals to control display 412 to display information and/or an image from detector array 440 depending on the operating mode. As previously described, the operating mode may be selected by a mode select input 464, or may be determined by manual operation of shutter 434 as detected by an associated switch/sensor 448 so that the mode switches to automatically display an image detected by detector array 440 when shutter 434 is closed. In some embodiments, shutter 434 may be manually operated by the user. Other embodiments include an electrically operated mechanical shutter or LCD shutter that is operated by controller 460 to change operating modes. Similarly, in embodiments having a second folding mirror 438, manual positioning of folding mirror 438 may be detected by an associated switch/sensor 450 to change operating modes from direct view to digitally imaged mode. Some embodiments have position of second folding mirror 438 controlled by controller 460 using an associated actuator. Similarly, various embodiments may include a controllable zoom lens 452 and/or adjustable iris 454 in communication with controller 460.

Controller may include a data input port to receive images/data from an external device/sensor 480. The received image/data can be processed by controller 460 and incorporated or superimposed with data from embedded sensors or detector array 440 to produce a composited image for display 412. Representative external devices/sensors may include a range finder 482, a bolometer thermal detector array 484, GPS, and/or position/bearing information 486, for example. External devices 480 may communicate via a wireless or wired connection through an associated data port of controller 460 to provide digital or analog information for controller 460 to incorporate into an image generated by display 412.

Controller 460 may include volatile and persistent memory for storing data and instructions used for image processing 470, ballistic trajectory compensation 472, and various other functions or features. In addition, inputs may be provided for azimuth and elevation adjustments 468 of the image position to center it with the direct view and azimuth and elevation adjustments462 to zero the sighting device for a particular target range. Azimuth/elevation adjustments 462 of the reticleare made electronically by controller 460 in response to user input to shift or adjust the position of the aiming reticle displayed on display 412. In some embodiments, trajectory compensation for ammunition may be provided based on distance or range of a selected target or other environmental information and the type of ammunition being fired by an associated weapon. Target information may be provided by a range finder 482 or input by the user, for example. Trajectory compensation may be provided by automatically adjusting or shifting position of a reticle in the image displayed by display 412 relative to the previous zero position of the reticle. For example, longer range targets may result in the reticle being shifted down or lowered from its zero position in the image displayed by display 412 so that the weapon muzzle is pointed higher when the user aligns the reticle with the target to compensate for the corresponding bullet drop at the target range. Similarly, for targets at a distance closer than the distance where the sighting device was zeroed, the reticle may be shifted up or raised relative to its zero position.

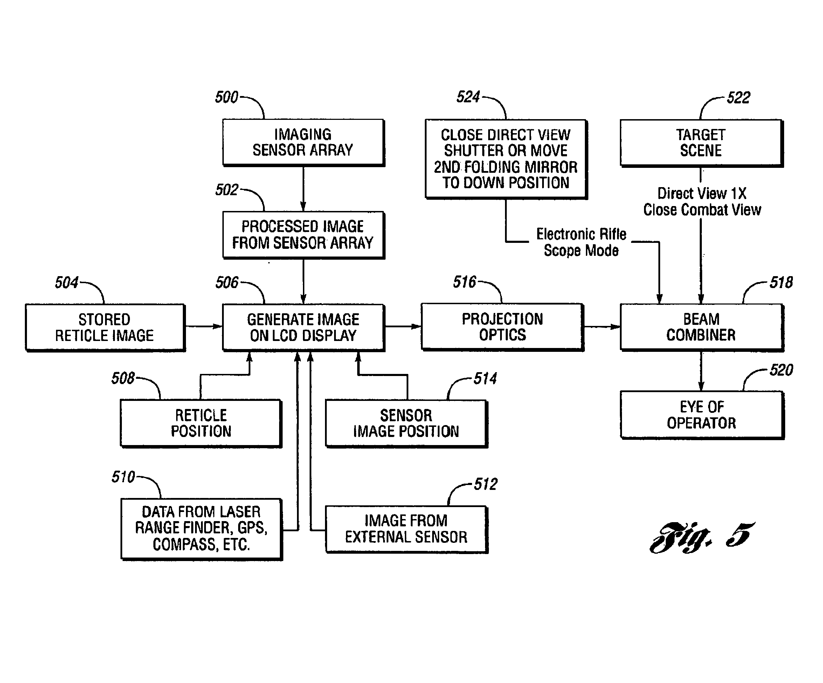

Figure 5 is a block diagram illustrating operation of a system or method for sighting a target in a target scene according to various embodiments of the present disclosure. As described previously with respect to Figure 4, various functions illustrated in Figure 5 are optional or not included in some embodiments depending on the particular implementation. Similarly, various functions may be performed by a controller or control logic implemented by hardware and software, while other functions are performed by optical elements and/or combinations of optical devices. The functions illustrated may be repeatedly performed although not explicitly illustrated. Similarly, some functions may be performed simultaneously, in a different order than shown, or may be omitted.

In one embodiment, a method for sighting a target in a target scene includes imaging light from the target scene onto a sensor or detector array as generally represented by block 500. The image from the detector or sensor array may be processed as represented by block 502 and used to generate an image on an illuminated display as represented by block 506 when operating in an electronic rifle scope mode. When operating in direct view or close combat mode, data from the imaging sensor array is not required and is generally not used to generate the image 506 on the illuminated display, which is implemented by an LCD display in one embodiment.

A stored reticle image 504 is generated on the illuminated display 506 and projected by projection optics 516 through a beam combiner 518 to an eye of the operator as generally represented by block 520. The projected image from the illuminated display 506 may be combined with a direct view of a target scene as represented by block 522 when operating in a direct view or close combat view mode and an associated direct view shutter or window is open as represented by block 524. Stored reticle image 504 may be incorporated into or composited with the processed image 502 from the sensor array when operating in the electronic rifle scope mode with the direct view blocked by a closed shutter or by a 2^{nd} folding mirror in the down position, for example, as generally represented by block 524. Projection optics 516 facilitate use of a stored reticle image 504 that is not aberration-limited to a dot, but may include larger and more complex combinations of geometric shapes, such as circles, polygons, lines, arcs, etc. that can be projected to be in focus with the direct view target scene.

As previously described, the operating mode may be changed between an electronic rifle scope mode and direct view or close combat view mode by activating a corresponding switch on the sighting device that communicates with a controller to control one or more electrically actuated mechanical, electromechanical, or electronic devices, such as a shutter and/or mirror positioning device. Alternatively, a shutter and/or mirror may be manually moved to a position to activate a particular operating mode. The controller may detect one or more switch inputs corresponding to shutter/mirror position and/or operator mode selection to control the image generated on the illuminated display as represented by block 506.

As also shown in Figure 5, block 502 represents processing the image from the imaging sensor array 502 for display on the illuminated display as represented by block 506. The generated image may include digital enhancement and/or magnification of the image using various image processing algorithms to improve target acquisition, for example. Reticle position on the display may be adjusted as represented by block 508. Adjustments may be made via corresponding inputs to shift the azimuth and elevation of the reticle to zero the sighting device. Alternatively, or in combination, repositioning of the reticle may be dynamically performed based on a trajectory calculation for a corresponding projectile using data from a laser range finder, GPS, compass, etc. as represented by block 510.Similarly, the position of the sensor image may be adjusted relative to the display as represented by block 514. Superposition or compositing of data from external sensors/devices, such as an external image sensor 512 may be performed to generate a combined image as represented by block 506.

As such, the present disclosure provides embodiments of a head-up display module with a wide field of view and distortionless direct view image that may be used in a sighting device. Use of an embedded monochrome or color display facilitates superposition of images, graphics, and/or digital data from embedded or external sensors on the direct view scene, or on an electronically generated and composited image of the target scene. As such, embodiments of the device can be used as a 1X close combat sight similar to a reddot or reflex sight, as a magnified electronic rifle scope, or as a direct view/thermal image fusion sight, for example. Use of an embedded imaging display in combination with embedded or external sensor data of various embodiments allows the position of an aiming reticle to be automatically adjusted on the display based on target or environmental information and superimposed on the direct view or electronically generated image of the target scene.

While one or more embodiments have been illustrated and described, it is not intended that these embodiments illustrate and describe all possible embodiments within the scope of the claims. Rather, the words used in the specification are words of description rather than limitation, and various changes may be made without departing from the spirit and scope of the disclosure. While various embodiments may have been described as providing advantages or being preferred over other embodiments or prior art implementations with respect to one or more desired characteristics, as one skilled in the art is aware, one or more features or characteristics may be compromised to achieve desired overall system attributes, which depend on the specific application and implementation. These attributes include, but are not limited to: cost, strength, durability, life cycle cost, marketability, appearance, packaging, size, serviceability, weight, manufacturability, ease of assembly, etc. The embodiments described as less desirable than other embodiments or prior art implementations with respect to one or more characteristics are not outside the scope of the disclosure and may be desirable for particular applications or implementations.

## Claims

1. A sighting device comprising:
a viewing window;
an illuminated display;
a beam combiner positioned to transmit light from a target scene and reflect light from the illuminated display through the viewing window; and
projection optics having a plurality of optical elements projecting an image of the display through the viewing window at a distance to be in focus with the target scene.

2. The sighting device of claim 1,
wherein the projection optics comprise a folding mirror disposed between two of the plurality of optical elements to direct light from the display toward the beam combiner.

3. The device of claim 1,
wherein the illuminated display emits substantially monochromatic light and wherein the beam combiner comprises a narrowband spectral reflector that has peak reflectivity at a wavelength corresponding to the substantially monochromatic light from the illuminated display.

4. The device of claim 3,
wherein the beam combiner comprises one of arugate notch filter, a holographic grating, and a partially silvered mirror.

5. The device of claim 1,
wherein the illuminated display comprises a transmissive liquid crystal display (LCD) backlit by a light emitting diode (LED).

6. The device of claim 1,
wherein the illuminated display includes an array of pixels for displaying an image of an aiming reticle.

7. The device of claim 6,
wherein the displayed image of the aiming reticle is electronically adjusted based on distance to a target in the target scene.

8. The device of claim 1 further comprising a sensor positioned to detect energy radiated from the target scene, the sensor in communication with the illuminated display.

9. The device of claim 8,
wherein the sensor detects distance to a target within the target scene and wherein the illuminated display generates a graphical representation depicting the distance.

10. The device of claim 9,
wherein the sensor comprises a detector array, the device further comprising an objective lens positioned to image the target scene on the detector array.

11. The device of any of claims1-10 further comprising:
a shutter selectively operable to block light from the target scene from being transmitted through the beam combiner and viewing window.

12. The device of claim 11,
wherein the illuminated display generates an image of only an aiming reticle when the shutter is open to allow direct viewing of the target scene with the aiming reticle, and an image of the target scene with the aiming reticle superimposed when the shutter is closed.

13. The device of claim 12,
wherein the shutter comprises one of a mechanical cover with an associated sensor for detecting cover position, and a liquid crystal display (LCD) shutter.

14. The device of any of claims 1-13 further comprising:
a folding mirror disposed on the target scene side of the beam combiner and positionable between a first position parallel to the beam combiner to reflect light passing through the beam combiner to the viewing window and a second position allowing light from the target scene to pass through the beam combiner and viewing window.

15. A method for sighting a target in a target scene, the method comprising:
imaging light from the target scene onto a detector array;
generating an image including an aiming reticle on an illuminated display;
illuminating the illuminated display with a narrowband source;
projecting the image from the illuminated display through a viewing window; and
combining the image from the illuminated display using a spectrally selective beam combiner matched to the narrowband source with a direct view of the target scene when a direct view window is open and generating an image of the target scene from the detector array on the illuminated display when the direct view window is blocked.
